# EUROPÄISCHE PATENTSCHRIFT

(11) **EP 2 531 741 B1**
(45) Veröffentlichungstag und Bekanntmachung des Hinweises auf die Patenterteilung: **10.06.2015**
(21) Anmeldenummer: 11701997.6
(22) Anmeldetag: 27.01.2011
(51) Int. Cl.: F16D 55/224, F16D 65/56

(54) **DRUCKSTANGENSTELLER FÜR KOMPAKT-BREMSZANGENEINHEITEN MIT SICH DIREKT AM STELLERGEHÄUSE ABSTÜTZENDEN VERSCHRAUBUNGSTEIL**
PLUNGER ROD ADJUSTER FOR COMPACT BRAKE CALIPER UNITS, HAVING A SCREW CONNECTION ELEMENT SUPPORTED DIRECTLY ON THE ADJUSTER HOUSING
ACTIONNEUR À TIGE DE PRESSION POUR DES UNITÉS D'ÉTRIER DE FREIN COMPACTES AVEC ÉLÉMENT FILETÉ PRENANT APPUI DIRECTEMENT SUR LE BOÎTIER D'ACTIONNEUR

(30) Priorität: 02.02.2010 DE 102010006709
(43) Veröffentlichungstag der Anmeldung: 12.12.2012
(73) Patentinhaber: KNORR-BREMSE Systeme für Schienenfahrzeuge GmbH, 80809 München (DE)
(72) Erfinder: EBNER, Christian, 86161 Augsburg (DE); FUDERER, Erich, 82256 Fürstenfeldbruck (DE); STEGMANN, André, 82223 Eichenau (DE)
(74) Vertreter: Mattusch, Gundula
(86) Internationale Anmeldenummer: PCT/EP2011/051098
(87) Internationale Veröffentlichungsnummer: WO 2011/095423

(56) Entgegenhaltungen:
- EP-A2- 0 699 846
- EP-A2- 0 732 247
- DE-A1- 10 214 670

## Beschreibung

Die Erfindung betrifft einen Verschleißnachsteller für eine Bremszange einer Scheibenbremse eines Schienenfahrzeugs, gemäß dem Oberbegriff von Anspruch 1.

In Kompakt-Bremszangeneinheiten von Schienenfahrzeugen wird der Verschleiß der Bremsbeläge und der Bremsscheibe durch Verlängerung bzw. Verkürzung eines Druck- oder Zugstangenstellers automatisch ausgeglichen. Die Verlängerung bzw. Verkürzung des Stellers erfolgt mittels eines Schraubgetriebes als Mutter-Spindel-System. Um eine möglichst große Nachstellung pro Betätigung zu erreichen, wird das Gewinde mit einer sehr großen Steigung ausgeführt. Das Gewinde ist deshalb nicht selbsthemmend. Während das eine Schraubgetriebeteil drehfest gehalten ist, z.B. die Mutter, ist das andere Schraubgetriebeteil, z.B. die Spindel drehbar gelagert.

Mittels eines Ansteuermechanismus wird ein Stellhebel mit Freilauf (z.B. Hülsenfreilauf) verdreht, welcher wiederum die Spindel oder die Mutter des Druckstangenstellers so antreibt bzw. dreht, dass sich der Steller im Falle eines Druckstangenstellers z.B. verlängert. Zum Nachstellen wird daher der Stellhebel über eine Druckstange mit Kugelkopf, welche in eine Kalotte des Stellhebels eingreift, betätigt. Über den im Stellhebel eingepressten Hülsenfreilauf wird die Spindel mitgedreht. Dabei rutscht ein Schlingfederfreilauf in Freilaufrichtung durch. Gibt die Druckstange beim Lösen der Bremse den Stellhebel wieder frei, so wird dieser durch eine Rückstellfeder wieder in seine Ausgangsstellung zurückgedreht, in welcher er gegen einen starren Anschlag des Stellergehäuses anschlägt. Der Hülsenfreilauf dreht sich dabei in Freilaufrichtung durch, dabei wird die Spindel durch die Schlingfeder des Schlingfederfreilaufs am Mitdrehen gehindert. Der Nachstellvorgang ist beendet, wenn der Stellhebel an einem Anschlag im Stellergehäuse anschlägt oder wenn sich im Steller, z.B. wenn die Beläge auf der Bremsscheibe zur Anlage kommen, eine Axialkraft aufbaut, welche der Ansteuermechanismus des Stellers nicht mehr überwinden kann.

Bei einem Druckstangensteller wird eine Drehung z.B. der Spindel des SpindelMutter-Getriebes in den Druckstangensteller verkürzender Richtung durch einen Schlingfederfreilauf zwischen Spindel und Stellergehäuse verhindert. Dieser Schlingfederfreilauf bildet neben dem Freilauf des Stellelements einen weiteren oder zweiten Freilauf. Durch den Schlingfederfreilauf wird die drehbare Spindel in ihrer Position gehalten, wenn das Stellelement durch die Kraft seiner Rückholfeder in seine Ausgangsstellung zurück gedreht wird bzw. wenn bei einer Bremsung eine hohe Zuspannkraft auf den Steller und damit ein großes Drehmoment auf die Spindel wirkt.

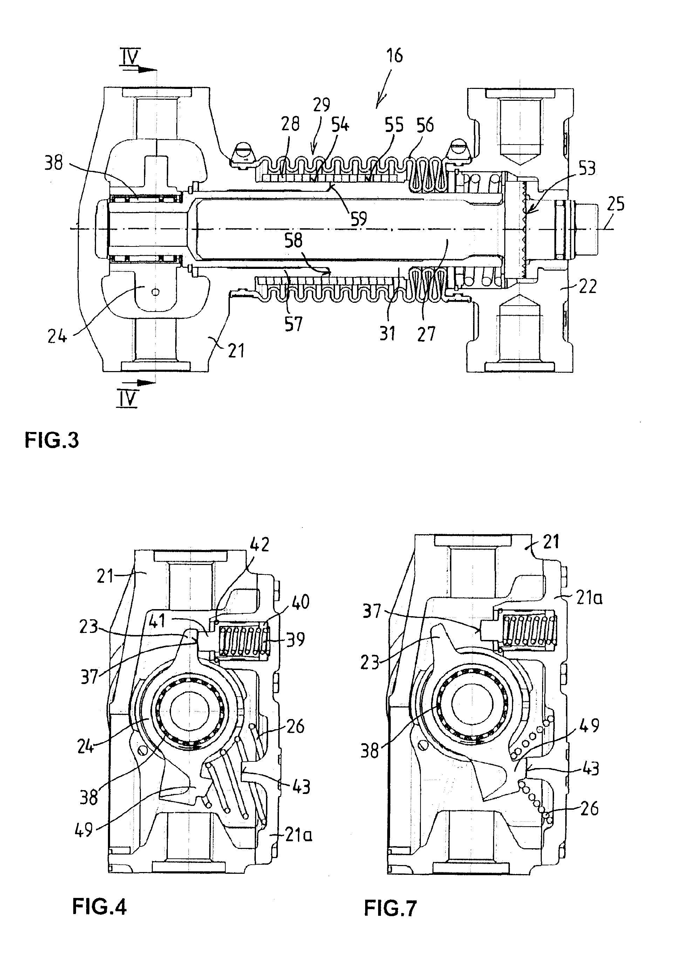

In der gattungsbildenden EP 0 732 247 B1 wird ein Druckstangensteller einer Bremszange einer Scheibenbremse eines Schienenfahrzeugs beschrieben, bei dem gemäß Fig.3 die Mutter drehfest im rechten Verschleißnachsteller-Gehäuse (Bezugszahl 22) gesichert und die Spindel drehbar in einem mit dem linken Verschleißnachsteller-Gehäuse (Bezugszahl 21) verbundenen Führungsrohr gelagert ist. Weiterhin ist ein in Drehrichtung der Spindel entgegen einer Verschleißnachstellung sperrender und in umgekehrter Drehrichtung freilaufender Schlingfederfreilauf vorhanden, durch welchen die Spindel mit dem separaten Führungsrohr koppelbar ist, welches am linken Verschleißnachsteller-Gehäuse festgelegt ist. Eine Schlingfeder des Schlingfederfreilaufs wird dabei vom linken Verschleißnachsteller-Gehäuse radial umschlossen, welches auch den Stellhebel (Bezugszahl 24) sowie dessen Hülsenfreilauf beherbergt.

Die Axialkraft, welche auf dem Druckstangensteller bei Bremsbetätigung lastet und welche ihn verkürzen will, wird im Kraftfluss von der drehfesten Mutter und die Gewindespindel über den Stellhebel im linken Verschleißnachsteller-Gehäuse abgestützt. Dadurch wird die Stellgenauigkeit des Verschleißnachstellers nicht nur von der Gewindereibung des Schraubgetriebes, sondern auch von den Reibungsverhältnissen zwischen dem Stellhebel und dem linken Verschleißnachsteller-Gehäuse bzw. zwischen dem Stellhebel und der Gewindespindel beeinflusst.

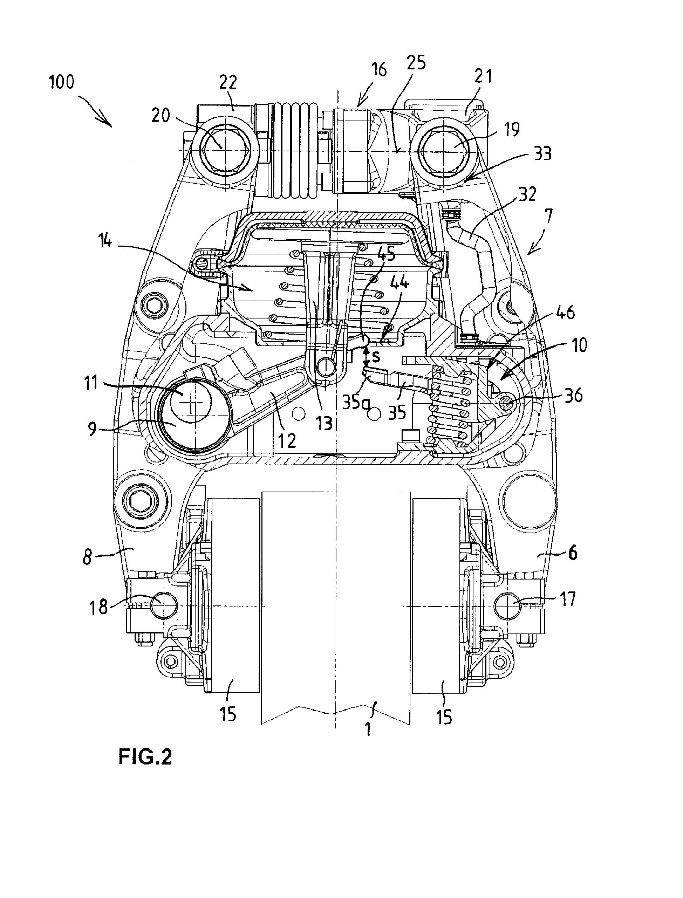

Die ebenfalls gattungsbildende EP 0 699 846 B1 beschreibt eine Scheibenbremse für Schienenfahrzeuge mit einer Bremszange und einem automatischen Verschleißnachsteller. In der dort beschriebenen Ausführung als Druckstangensteller wird der Stellhebel durch eine Stellhülse mit Außenverzahnung gebildet. In diese Stellhülse ist ein Hülsenfreilauf eingepresst. Mit der Verzahnung der Stellhülse im Eingriff steht ein Zahnradsegment, über das mittels eines Hebels die Stellhülse gegen die Kraft einer Rückholfeder gedreht werden kann. Über den Hülsenfreilauf wird die Mutter mitgenommen, wodurch sich der Druckstangensteller verlängert. Gemäß Fig.2 ist die Spindel dabei drehfest im linken Verschleißnachsteller-Gehäuse und die Mutter drehbar im rechten Verschleißnachsteller-Gehäuse gelagert. Über eine Schlingfeder eines Schlingfederfreilaufs kann die drehbare Mutter an einem radial inneren Rohrteil (Bezugszahl 29) festgelegt werden, welches mit dem rechten Verschleißnachsteller-Gehäuse verbunden ist. Weiterhin umschließt ein rohrartiges Gehäuseteil (Bezugszahl 30) des rechten Verschleißnachsteller-Gehäuse den Schlingfederfreilauf.

Auch gemäß DE 102 14 670 A1 ist bei einem Verschleißnachsteller einer Bremszuspanneinrichtung eines Schienenfahrzeugs ein Gehäuseteil, an dem sich eine Schlingfeder eines Schlingfederfreilaufs abstützt, mehrteilig und doppelrohrartig aufgebaut, wobei die Schlingfeder zwischen einem inneren Rohrteil und einem äußeren Rohrteil angeordnet ist.

Bei den beschriebenen Druckstangenstellern des Stands der Technik ist jeweils wenigstens ein Verschleißnachsteller-Gehäuse mehrteilig und insbesondere doppelrohrartig aufgebaut, indem die Schlingfeder des Schlingfederfreilaufs mit einem separaten, mit dem betreffenden Verschleißnachsteller-Gehäuse verbundenen Rohr zusammenwirkt und andererseits der Schlingfederfreilauf jeweils von einem rohrartigen Fortsatz dieses Verschleißnachsteller-Gehäuses radial umschlossen wird. Der Aufbau eines solchen doppelrohrartigen Verschleißnachsteller-Gehäuses ist jedoch mit einem gewissen Kostenaufwand bei der Herstellung sowie Montage bzw. Demontage zu Reparaturzwecken verbunden.

Darüber hinaus reduziert der Platzbedarf für die Verbindung der separaten Rohre mit dem betreffenden Verschleißnachsteller-Gehäuse den Bauraum für den Schlingfederfreilauf, weshalb die Schlingfeder beim beschriebenen Stand der Technik mittels eines Hakens an dem drehfesten und separaten Rohr festgelegt werden muss. Ein solcher Haken hat jedoch einen ungünstigen Einfluss auf die Schaltgenauigkeit des Schlingfederfreilaufs und damit auf die Stellgenauigkeit des Verschleißnachstellers. Weiterhin ist auch bei der Fertigung ein eigener Schritt zur Herstellung des Hakens erforderlich.

Die Aufgabe der Erfindung besteht demgegenüber darin, einen Verschleißnachsteller der eingangs genannten Art derart weiter zu bilden, dass er einfacher zu fertigen ist und zugleich eine größere Stellgenauigkeit aufweist.

### Offenbarung der Erfindung

Die Erfindung geht davon aus, dass das drehfeste Teil unmittelbar durch das erste Verschleißnachsteller-Gehäuse gebildet wird. Unter dem Begriff "unmittelbar" ist dabei zu verstehen, dass sich das drehbare Verschraubungsteil mittels des Schlingfederfreilaufs bzw. der Schlingfeder direkt, d.h. ohne Zwischenordnung weiterer Bauelemente wie etwa Rohre am ersten Verschleißnachsteller-Gehäuse abstützen kann. In diesem Sinne ist das erste Verschleißnachsteller-Gehäuse einstückig ausgeführt, wobei keine als separate Teile ausgebildeten Bauelemente wie Fortsätze oder Rohre an ihm befestigt sind, welche sich im Kraftfluss befinden, wenn der Verschleißnachsteller eine ihn Verkürzungsrichtung belastende Axialkraft abstützen muss.

Unter einem "ersten" Verschleißnachsteller-Gehäuse soll das Gehäuseteil des Verschleißnachstellers verstanden werden, welches an dem einem Zangenhebel der Bremszange und unter dem "zweiten" Verschleißnachsteller-Gehäuse das Gehäuseteil, welches an dem anderen Zangelhebel angelenkt ist. Im Sprachgebrauch des Fachgebiets ist auch "Gehäuse" für das erste Verschleißnachsteller-Gehäuse und "Joch" für das zweite Verschleißnachsteller-Gehäuse üblich.

Dadurch kann die doppelrohrartige Ausbildung des ersten Verschleißnachsteller-Gehäuses des Stands der Technik entfallen, insbesondere etwaige separate am ersten Verschleißnachsteller-Gehäuse befestigte Führungsrohre, wodurch sich die Anzahl der Bauteile des Verschleißnachstellers und damit die Fertigungs- und Montagekosten vorteilhaft reduzieren.

Erfindungsgemäß wirkt eine Schlingfeder des Schlingfederfreilaufs einerseits mit einer radial äußeren, eine äußere Oberfläche des ersten Verschleißnachsteller-Gehäuses ausbildenden Wirkfläche und andererseits mit einer radial äußeren Wirkfläche des drehbaren Verschraubungsteils oder eines mit diesem mitdrehenden Elements reibschlüssig zusammen., wobei die Wirkfläche des ersten Verschleißnachsteller-Gehäuses an einem rohrförmigen, mit dem ersten Verschleißnachsteller-Gehäuse einstückigen Fortsatz ausgebildet ist.

Mit anderen Worten bildet die Wirkfläche für die Schlingfeder bereits einen Teil der äußeren Oberfläche des ersten Verschleißnachsteller-Gehäuses aus, ohne dass sie von weiteren Rohren oder Gehäuseabschnitten umschlossen wird. Unter einer "Wirkfläche" soll dabei die Fläche des betreffenden Bauteils verstanden werden, an welcher Windungen der Schlingfeder von radial außen her angreifen, um einen Reibschluss zwischen der Schlingfeder und dem betreffenden Bauteil herzustellen.

Dann greift die Schlingfeder des Schlingfederfreilaufs zum einen an der Wirkfläche des drehbaren Verschraubungsteils und zum andern an einer nunmehr eine Außenfläche des ersten Verschleißnachsteller-Gehäuses bildenden Wirkfläche an, um das drehbare Verschraubungsteil durch Reibschluss bzw. reibschlüssige Kopplung mit dem drehfesten Verschraubungsteil am Drehen zu hindern und nicht mehr an einer Wirkfläche eines im Inneren des ersten Verschleißnachsteller-Gehäuses angeordneten, separaten Rohres. Dadurch ergeben sich günstigere Platzverhältnisse. Insbesondere ist dann mehr Bauraum für die Schlingfeder des Schlingfederfreilaufs vorhanden, wodurch deren Längserstreckung in Axialrichtung des Verschleißnachstellers vergrößert werden kann. Weil dann mehr Windungen an der Wirkfläche des ersten Verschleißnachsteller-Gehäuses bzw. des drehfesten Verschraubungsteils angreifen können, werden der Reibschluss des Schlingfederfreilaufs und damit die Kraftübertragung verbessert. Mithin kann auf einen Haken zur Befestigung der Schlingfeder verzichtet werden. Diese Maßnahme wirkt sich wiederum positiv auf die Schaltgenauigkeit des Schlingfederfreilaufs und damit auf die Stellgenauigkeit des Verschleißnachstellers aus. In diesem Fall kann die Kraftübertragung am Schlingfederfreilauf ausschließlich durch Reibschluss zwischen den Windungen der Schlingfeder und den zugeordneten Wirkflächen am ersten Verschleißnachsteller-Gehäuse und dem drehbaren Verschraubungsteil stattfinden.

Durch die in den Unteransprüchen aufgeführten Maßnahmen sind vorteilhafte Weiterbildungen und Verbesserungen der in den unabhängigen Ansprüchen angegebenen Erfindung möglich.

Um das Schraubgetriebe, den Schlingfederfreilauf sowie weitere Bauteile des Verschleißnachstellers vor Verschmutzung und Feuchtigkeit beispielsweise hermetisch zu schützen, ist die Schlingfeder des Schlingfederfreilaufs in radialer Richtung gesehen lediglich nur noch von einem in Axialrichtung des Verschleißnachstellers elastischen Faltenbalg umschlossen, welcher einendseitig an dem ersten Verschleißnachsteller-Gehäuse und anderendseitig an dem zweiten Verschleißnachsteller-Gehäuse festgelegt ist. Der Schlingfederfreilauf und die Schlingfeder sind dann in Axialrichtung gesehen bevorzugt den beiden Ankoppelstellen des Faltenbalgs an den Verschleißnachsteller-Gehäusen zwischengeordnet.

Bei geeigneter Mindestlänge der Schlingfeder, welche durch die erfindungsgemäßen Maßnahmen ermöglicht wird, kann dann die Schlingfeder die Wirkfläche des ersten Verschleißnachsteller-Gehäuses und die Wirkfläche des drehbaren Verschraubungsteils oder des mit diesem mitdrehenden Elements lediglich durch Reibschluss unter Verzicht auf einen formschlüssigen Haken koppeln. Wie oben bereits erläutert, wirkt sich der Verzicht bei der Schlingfeder auf einen Haken positiv auf die Schaltgenauigkeit des Schlingfederfreilaufs und damit auf die Stellgenauigkeit des Verschleißnachstellers aus. Insbesondere kann dadurch ein Verschleiß der Wirkflächen bzw. der Schlingfeder vermieden werden, weil infolge der dann freien Bewegung der Schlingfeder in Axialrichtung kein Verkanten der Schlingfeder mit lokal großen Spannungsspitzen auftreten kann.

Gemäß einer Weiterbildung weist das drehbare Verschraubungsteil oder ein mit diesem mitdrehendes Element eine in Axialrichtung weisende Stirnfläche auf, welche eine korrespondierende Stirnfläche des ersten Verschleißnachsteller-Gehäuses zum Abstützen einer auf den Verschleißnachsteller wirkenden Axialkraft kontaktiert. In diesem Fall läuft der axiale Kraftfluss daher beispielsweise vom zweiten Verschleißnachsteller-Gehäuse über das dort drehfest gehaltene Verschraubungsteil und das mit diesem verschraubte und durch den Schlingfederfreilauf am Drehen gehinderte an sich drehbare Verschraubungsteil über die beiden sich kontaktierenden Stirnflächen direkt in das erste Verschleißnachsteller-Gehäuse. Folglich wird eine auf den Verschleißnachsteller wirkende und über die Zangenhebel eingeleitete Druckkraft direkt und ohne Umweg über den Stellhebel wie etwa bei EP 0 732 247 B1 in das erste Verschleißnachsteller-Gehäuse eingeleitet, so dass die Reibungsverhältnisse des Stellhebels die Stellgenauigkeit nicht mehr beeinflussen können. Insbesondere wird durch diesen Kraftfluss die Trennfuge unter dem Schlingfederfreilauf geschlossen.

Bevorzugt bildet das drehbare Verschraubungsteil die Gewindespindel und das drehfeste Verschraubungsteil des Schraubgetriebes die Mutter. Dann kann mit der Gewindespindel eine Kupplungshülse als mitdrehendes Element gekoppelt sein, an deren radial äußerer Umfangsfläche eine Wirkfläche für den Angriff der Schlingfeder des Schlingfederfreilaufs ausgebildet ist. Diese Kupplungshülse ist dann beispielsweise in dem ersten Verschleißnachsteller-Gehäuse drehgelagert. Die Kupplungshülse ist notwendig, weil die Gewindespindel innerhalb der Mutter und die Schlingfeder radial außen angeordnet ist, so dass die Drehbewegung der Gewindespindel nach radial außen übertragen werden muss.

Gemäß einer Alternative wird das drehbare Verschraubungsteil durch die Mutter und das drehfeste Verschraubungsteil durch die Gewindespindel gebildet. Dann ist beispielsweise die Wirkfläche für den Angriff der Schlingfeder des Schlingfederfreilaufs unmittelbar an einer radial äußeren Umfangsfläche der Mutter ausgebildet, weil die Mutter ohnehin radial außen angeordnet ist.

Von der Erfindung umfasst sind insbesondere auch Scheibenbremsen von Schienenfahrzeugen, welchen einen vorab beschriebenen Verschleißnachsteller beinhalten.

Genaueres geht aus der folgenden Beschreibung von Ausführungsbeispielen hervor.

### Zeichnung

Nachstehend sind Ausführungsbeispiele der Erfindung in der Zeichnung dargestellt und in der nachfolgenden Beschreibung näher erläutert. In der Zeichnung zeigt
- Fig.1: eine Draufsicht auf eine Scheibenbremse eines Schienenfahrzeugs mit einem Druckstangensteller einer Bremszange als Verschleißnachsteller gemäß einer bevorzugten Ausführungsform der Erfindung;
- Fig.2: eine teilweise aufgeschnittene Ansicht der Bremszange von Fig.1;
- Fig.3: eine Querschnittsdarstellung des Druckstangenstellers der Scheibenbremse von Fig.1;
- Fig.4: eine Querschnittsdarstellung entlang der Linie IV-IV von Fig.3, welche ein mit einem Hülsenfreilauf in einem Stellergehäuse gelagertes Stellelement in seiner Ausgangsstellung zeigt;
- Fig.5: das Stellelement von Fig.4 in einer über die Ausgangsstellung hinaus belasteten Stellung;
- Fig.6: einen vergrößerten Ausschnitt aus Fig.5;
- Fig.7: das Stellelement von Fig.4 in einer Stellung, welche einem maximalen Nachstellweg des Druckstangenstellers von Fig.3 entspricht;
- Fig.8: eine Querschnittsdarstellung einer weiteren Ausführungsform eines Druckstangenstellers;
- Fig.9: eine Querschnittsdarstellung des Druckstangenstellers von Fig.3 in verlängertem Zustand;
- Fig.10: eine Querschnittsdarstellung einer weiteren Ausführungsform eines Druckstangenstellers.

### Beschreibung der Ausführungsbeispiele

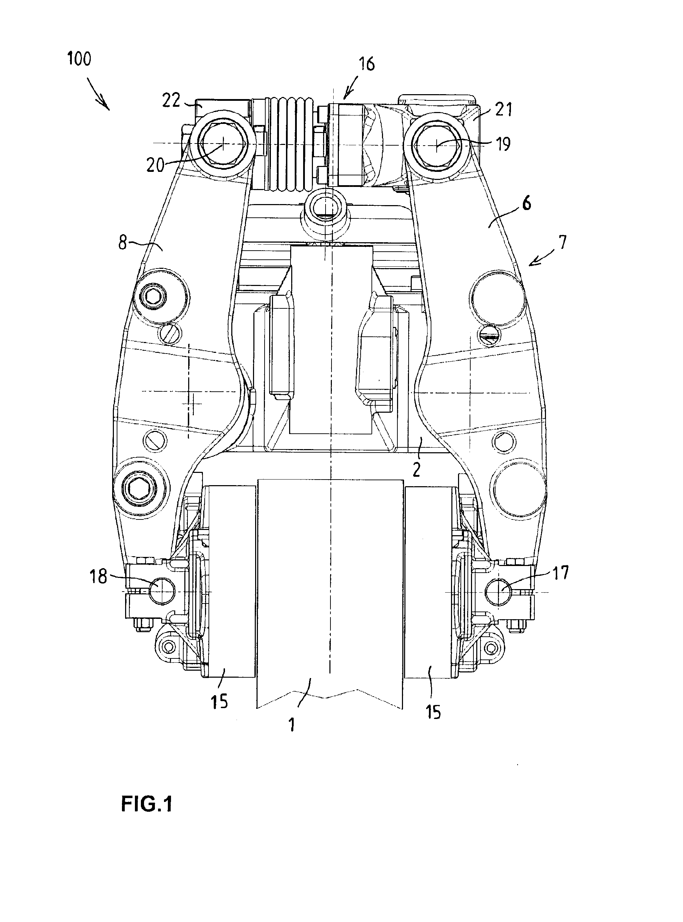

Fig.1 und Fig.2 zeigen eine Scheibenbremse 100 für insbesondere querverschiebliche Radsätze von Schienenfahrzeugen, mit einer exzentrisch angetriebenen Bremszange 7, deren beide Zangenhebel 6, 8 an ihren einen Enden mit Bremsbacken 15 und in ihren mittleren Bereichen mit einem Bremskraftmotor 14 gekoppelt sind. Die Bremsscheibe 1 ist als Achsscheibe nur teilweise dargestellt.

An einem Bremsengehäuse 2 sind in einer als raumfest gehalten anzusehenden Koppelstelle 10 vermittels Bolzen 9 die beiden Wangen eines doppelwangigen Zangenhebels 6 einer Bremszange 7 um eine Drehachse drehbar angekoppelt. Der andersseitige Zangenhebel 8 ist in einer Koppelstelle 10 mittels eines Bolzens 9 am Bremsengehäuse 2 drehbar angekoppelt, der Bolzen 9 ist dabei um eine zur Drehachse parallele Drehachse drehbar am Bremsengehäuse 2 gelagert und trägt exzentrisch achsparallele Bolzenfortsätze 11, auf welchen der Zangenhebel 8 gelagert ist.

Vom Bolzen 9 kragt ein Dreharm 12 aus, an dessen Ende die Kolbenstange eines Bremszylinders als Kraftabgabeorgan 13 eines Bremskraftmotors 14 angelenkt ist. Die beiden Zangenhebel 6 und 8 sind an ihren einen Enden mit an die Bremsscheibe 1 anpressbaren Bremsbacken 15 und an ihren anderen Enden mit einem sie verbindenden Verschleißnachsteller 16, im Ausführungsbeispiel ein Druckstangensteller drehbar in Koppelstellen 17, 18, 19 und 20 gekoppelt. Der Druckstangensteller 16 bzw. sein Stellergehäuse ist zu seiner Ankopplung mit sich jeweils zwischen den beiden Wangen 4 und 5 der Zangenhebel 6 und 8 erstreckenden Lagerteilen 21 und 22 versehen. Diese Lagerteile werden im Folgenden auch als erstes bzw. zweites Verschleißnachsteller-Gehäuse 21, 22 bezeichnet.

Beim Druckmittelbeaufschlagen des beispielsweise pneumatischen Bremskraftmotors 14 dreht dessen Kraftabgabeorgan 13 den Drehhebel 12, wodurch infolge der exzentrischen Anordnung der Bolzenfortsätze 11 der Zangenhebel 8 um seine Koppelstelle 20 zum Druckstangensteller 16 in Andrückrichtung seiner Bremsbacke 15 an die Bremsscheibe 1 gedreht wird. Der Aufbau und die Funktionsweise der Exzenter-Zuspannung der Bremszange 7 entspricht damit derjenigen nach der bereits erwähnten EP 0 732 247 A2. Nach Anlegen der dem Zangenhebel 8 zugeordnete Bremsbacke 15 an die Bremsscheibe 1 dreht sich der Zangen hebel 8 um seine Koppelstelle 18 zu dieser Bremsbacke 15, wobei über die Koppelstelle 20, die Stange 16 und die Koppelstelle 19 der Zangenhebel 6 um die Koppelstelle 10 zum Anlegen seiner Bremsbacke 15 an die Bremsscheibe 1 gedreht wird.

Der Druckstangensteller 16 vergrößert entsprechend dem Verschleiß der Bremsbacken 15 seine Länge. Hierzu weist er einen Stellhebel 24 auf, der am dem Zangenhebel 6 zugeordneten ersten Verschleißnachsteller-Gehäuse 21 um eine Längsachse 25 des Druckstangenstellers 16 drehbar gelagert ist. Ein zapfenförmiger Anschlagabschnitt 23 des Stellhebels 24 ist vermittels einer sich gegen das ersten Verschleißnachsteller-Gehäuse 21 abstützenden Rückstellfeder 26 in seine Ausgangsstellung und gegen einen in den Figuren 3 bis 8 dargestellten Anschlag 37 gedrängt.

Wie aus Fig.3 hervorgeht, ist eine mittels einer vorgespannten Verzahnung 53 gegen Verdrehen gesicherte erstreckende Gewindespindel 27 koaxial zur Längsachse 25 drehfest und axial unverschieblich im zweiten Verschleißnachsteller-Gehäuse 22 gehalten. Demgegenüber ist eine mit der Gewindespindel 27 verschraubte Stellmutter 31 am ersten Verschleißnachsteller-Gehäuse 21 drehbar gelagert. Die Gewindespindel 27 und die Stellmutter bilden zusammen ein Schraubgetriebe des Druckstangenstellers 16.

Die Stellmutter 31 ist über eine mit einer Schlingfeder 28 ausgestattete Einwegdrehkupplung oder Schlingfederfreilauf 29 mit dem ersten Verschleißnachsteller-Gehäuse 21 drehfest koppelbar. Andererseits wird die Stellmutter 31 über den Hülsenfreilauf 38 durch den Stellhebel 24 in Verlängerungsrichtung des Druckstangenstellers 16 angetrieben. Der Prinzipaufbau und die Funktionsweise derartiger Verschleißnachsteller mit Schraubgetriebe und zwei Einwegdrehkupplungen bzw. Freiläufen sind allgemein bekannt und brauchen daher nicht in allen Einzelheiten beschrieben zu werden. Es können jedoch auch andere Bauarten von Verschleißnachstellern verwendet werden, beispielsweise Zugstangensteller, wesentlich ist unter anderem lediglich, dass er ein dem Stellhebel 24 entsprechendes Stellelement aufweist.

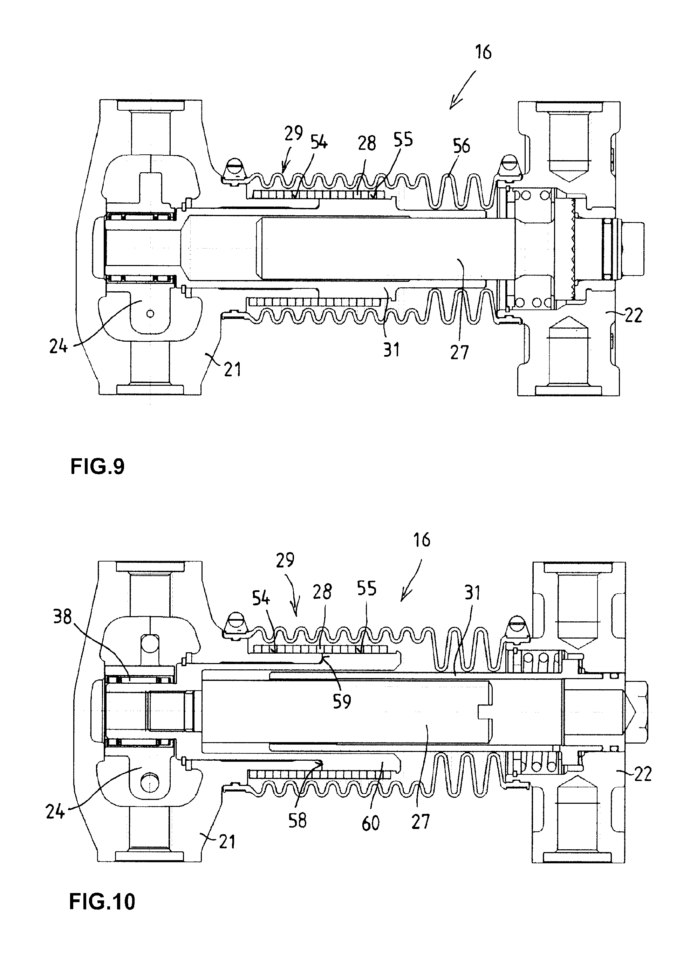

In der dargestellten Ausführung gemäß Fig.3 ist die Gewindespindel 27 drehfest im zweiten Verschleißnachsteller-Gehäuse 22 und die Stellmutter 31 dagegen drehbar im ersten Verschleißnachsteller-Gehäuse 21 gelagert. Über den Stellhebel 24 mit Hülsenfreilauf 38 kann die Rohrmutter 31 in einer Richtung gedreht werden, in welcher der Druckstangensteller 16 zum Verschleißnachstellen verlängert wird. Jedoch ist auch eine Ausführung, z.B. gemäß EP 0 732 247 A2 denkbar, bei welcher die Gewindespindel 27 vom Stellhebel 24 drehbar angetrieben und die Stellmutter 31 drehfest gelagert ist, wie dies auch gemäß der Ausführungsform von Fig.10 später noch beschrieben wird.

Die Schlingfeder 28 stützt das aus einer auf den Druckstangensteller 16 wirkenden Axialkraft entstehende Drehmoment von der dann am Drehen gehinderten Stellmutter 31 direkt an einer radial äußeren Wirkfläche 54 des ersten Verschleißnachsteller-Gehäuses 21ab, welche zugleich eine äußere Oberfläche des ersten Verschleißnachsteller-Gehäuses 21 bildet. Die radial äußere Wirkfläche 54 ist dabei an einem rohrförmigen, aber mit dem ersten Verschleißnachsteller-Gehäuse 21 einstückigen Fortsatz 57 ausgebildet. Die in Fig.3 bevorzugt drehbare Stellmutter 31 weist ebenfalls eine Wirkfläche 55 für die Schlingfeder 28 auf, d.h., dass Windungen der Schlingfeder 28 an ihr angreifen können, deren weitere Windungen an der Wirkfläche 54 des ersten Verschleißnachsteller-**Gehäuses** 21 **angreifen**, um durch Durchmesserverkleinerung der Schlingfeder 28 eine Drehung der Stellmutter 31 und damit eine Verkürzung des Druckstangenstellers 16 bei Axialkraftbelastung zu unterbinden. Die Schlingfeder 28 des Schlingfederfreilaufs koppelt dann die Wirkfläche 54 des ersten Verschleißnachsteller-Gehäuses 21 und die Wirkfläche der Stellmutter 31 ausschließlich durch Reibschluss unter Verzicht formschlüssiger Mittel wie etwa einem Haken.

Um das Schraubgetriebe 27, 31, den Schlingfederfreilauf 29 sowie weitere Bauteile vor Verschmutzung und Feuchtigkeit zu schützen, ist die Schlingfeder 28 des Schlingfederfreilaufs 29 in radialer Richtung gesehen lediglich nur noch von einem in Axialrichtung des Druckstangenstellers 16 elastischen Faltenbalg 56 umschlossen, welcher einendseitig an dem ersten Verschleißnachsteller-Gehäuse 21 und anderendseitig an dem zweiten Verschleißnachsteller-Gehäuse 22 festgelegt ist, beispielsweise über Spannringe.

Die Stellmutter 31 weist eine in Axialrichtung weisende Stirnfläche 58 auf, welche eine korrespondierende Stirnfläche 59 des ersten Verschleißnachsteller-Gehäuses 21 zum Abstützen einer auf den Druckstangensteller 16 wirkenden Axialkraft kontaktiert. Der axiale Kraftfluss läuft daher beispielsweise vom zweiten Verschleißnachsteller-Gehäuse 22 über die dort drehfest gehaltene Gewindespindel 27 und die mit dieser verschraubte und durch den Schlingfederfreilauf 29 am Drehen gehinderte Stellmutter 31 über die beiden sich kontaktierenden Stirnflächen 58, 59 direkt und unmittelbar in das erste Verschleißnachsteller-Gehäuse 21.

In Fig.9 ist der Druckstangensteller von Fig.3 in verlängertem Zustand gezeigt, d.h., dass die Stellmutter 31 vom Stellhebel 24 in einer Drehrichtung auf der Gewindespindel 27 angetrieben wurde, welche den Druckstangensteller 16 verlängert, um einen Verschleiß der Bremsbacken 15 automatisch nachzustellen. Der Schlingfederfreilauf 29 ist dabei freilaufend, d.h. dass die Windungen der Schlingfeder 28 unter Durchmesservergrößerung der Schlingfeder 28 außer Eingriff mit den Wirkflächen 54 bzw. 55 gelangen, so dass sich die Stellmutter 31 in Verschleißnachstellrichtung frei drehen kann. Wie zu erkennen, hat sich der Faltenbalg 56 bei Verlängerung des Druckstangenstellers 16 elastisch verformt, weil sich die beiden Verschleißnachsteller-Gehäuse 21, 22 voneinander entfernt haben.

In Fig.10 ist ein weiteres Ausführungsbeispiel eines Druckstangenstellers 16 gezeigt, bei welchem das drehbare Verschraubungsteil des Schraubgetriebes durch die Gewindespindel 27 und das drehfeste Verschraubungsteil des Schraubgetriebes durch die Stellmutter 31 gebildet wird. Dann ist mit der Gewindespindel 27 eine Kupplungshülse 60 als mitdrehendes Element drehgekoppelt, an deren radial äußerer Umfangsfläche eine Wirkfläche 55 für den Angriff der Schlingfeder 28 des Schlingfederfreilaufs 29 ausgebildet ist. Die Kupplungshülse 60 ist dann zusammen mit der Gewindespindel 27 beispielsweise in dem ersten Verschleißnachsteller-Gehäuse 21 drehgelagert und die Stellmutter 31 in dem zweiten Verschleißnachsteller-Gehäuse 22 drehfest gehalten. In diesem Fall umschließt die Kupplungshülse 60 zumindest einen zum ersten Verschleißnachsteller-Gehäuse 21 weisenden Abschnitt der Gewindespindel 27, wobei die Kupplungshülse 60 mittels des Hülsenfreilaufs 38 mit dem Stellhebel 24 gekoppelt ist. Auch stützt sich eine Stirnfläche 58 der Kupplungshülse 60 an einer korrespondierenden Stirnfläche 59 des ersten Verschleißnachsteller-Gehäuses 21 bzw. dessen Fortsatzes 57 ab, falls der Druckstangensteller 16 unter Axiallast gerät.

Zum Verschleißnachstellen treibt dann die Stellhülse 24 ebenfalls über den Hülsenfreilauf 38 und die Kupplungshülse 60 die Gewindespindel 27 an, um diese aus der Stellmutter 31 zur Verlängerung des Druckstangenstellers 16 heraus zu schrauben. Der Schlingfederfreilauf 29 ist dabei freilaufend, d.h. dass die Windungen der Schlingfeder 28 unter Durchmesservergrößerung der Schlingfeder 28 außer Eingriff mit den Wirkflächen 54 bzw. 55 gelangen, so dass sich die Gewindespindel 27 in Verschleißnachstellrichtung frei drehen kann. Eine Drehung der Gewindespindel 27 in Gegenrichtung wird dagegen durch den dann sperrenden Schlingfederfreilauf 29 verhindert.

Zwischen den beiden Wangen 4 und 5 des Zangenhebels 6 verläuft eine Steuerstange 32, deren gerundetes, rückwärtiges Ende in einer Lagerpfanne am freien Ende des Stellhebels 24 anliegt. Die Steuerstange 32 ist somit über eine Koppelstelle 33 mit dem Betätigungshebel 24 gekoppelt, in Fig.2 ist der Betätigungshebel 24 jedoch nicht eingezeichnet. In ihrem mittleren Bereich ist die Steuerstange 32 zum Vermeiden von Kollisionen mit anderen Bauteilen, insbesondere dem Bremskraftmotor 14, zur Bremszangenaußenseite hin ausgekröpft. Das vordere, ebenfalls gerundete Ende der Steuerstange 32 liegt in einer hier nicht sichtbaren Lagerpfanne eines Drehhebels 35 auf, wie es aus der Fig.2 ersichtlich ist. Der zweiarmige Drehhebel 35 ist in seinem mittleren Bereich in einer Anlenkstelle 36 drehbar gelagert und weist einen freien Schenkel 35a auf. Die Funktionsweise des Drehhebels 35 im Zusammenhang mit angrenzenden Bauelementen ist in EP 0 732 247 A2 ausführlich erläutert.

Das freie Ende 35a des Drehhebels 35 steht zur Bildung einer Tothubeinrichtung 44, wie aus Fig.2 ersichtlich, bremsscheibenseitig mit einem Abstand s einem Hebelteil 45 gegenüber. Das Hebelteil 45 ist als eine Verlängerung des Dreharmes 12 ausgebildet. Der Abstand s entspricht dem Weg, den, ausgehend von mit korrektem Lösehub gelöster Scheibenbremse, das Ende des Hebelteiles 45 beim noch zuspannungskraftfreien Anlegen der beiden Bremsbacken 15 an die Bremsscheibe 1 zurücklegt. Beim Bremsenanlegen schlägt das Hebelteil 45 gerade an den Schenkel 35a des Drehhebels 35 an.

Bei einem Bremsen-Anlegevorgang, ausgehend von einem z.B. durch Bremsbackenverschleiß zu großen Lösehub der Scheibenbremse, nimmt ab Beginn eines Überwindens des Löse-Überhubes das Hebelteil 45 bei seiner weiteren Bewegung bis zum Erreichen des Anlegens der Bremse den Schenkel 35a unter Drehen des Drehhebels 35 mit, wobei die Steuerstange 32 in Richtung zum Stellhebel 24 verschoben wird und hierbei den Druckstangennachsteller 16 betätigt. Das bremsscheibenseitige, vordere Ende der Steuerstange 32 ist somit über eine den Drehhebel 35 mitumfassende Koppelstelle 46 an das Kraftabgabeorgan 13 des Bremskraftmotors 14 ankoppelbar.

I n Abänderung zum beschriebenen Ausführungsbeispiel können an der Bremszange die Zangenhebel mittig an einem Zugstangensteller 16 angelenkt sein, welcher durch einen Stellhebel 24 in Verkürzungsrichtung des Zugstangenstellers betätigbar ist. Der Verschleißnachsteller 16 kann beliebiger Bauart sein, er muss lediglich - wie bereits erwähnt - einen Stellhebel aufweisen. Die Halterung der Bremszange an einem raumfesten Teil, letztlich einem Fahrzeug- oder Drehgestellrahmen, kann an anderer Koppelstelle als der Koppelstelle 10 erfolgen, die Bauform einer Bremszangeneinheit kann evtl. mit dem Bremsengehäuse entfallen. Auch das Zuspannen der Bremszange 7 kann andersartig, in einer der vielen, bekannten Arten, erfolgen, beispielsweise vermittels eines direkt oder über ein Hebelgetriebe mit den Zangenhebeln 6, 8 gekoppelten Bremszylinders.

Die Länge des Druckstangenstellers ist daher abhängig vom Hub des Bremskraftmotors über einen Steuermechanismus einstellbar, welcher mit einer Steuerstange 32 auf den Stellhebel 24 des Druckstangenstellers 16 wirkt. Wie insbesondere aus Fig.3 bis Fig.8 hervorgeht, ist der Stellhebel 24 mit einem Hülsenfreilauf 38 in dem Stellergehäuse bzw. Lagerteil 21 des Druckstangenstellers 16 gelagert und in einer nachstellungsfreien Ausgangsstellung mit dem zapfenartigen Anschlagabschnitt 23 gegen einen Anschlag 37 des Lagerteils 21 bzw. einen Deckel 21 a des Lagerteils 21 durch die Rückstellfeder 26 belastet. Diese Situation ist insbesondere in Fig.4 gezeigt, in welcher sich der Stellhebel 24 in seiner federbelasteten Ausgangsstellung befindet.

Der Anschlag 37 für das sich in seiner Ausgangsstellung befindliche Stellelement 24 beinhaltet wenigstens ein in Anschlagrichtung elastisches Element 39, vorzugsweise eine Druckfeder. Die Druckfeder 39 ist vorgespannt, wobei ihre Vorspannkraft größer als die Kraft der den Stellhebel 24 gegen den Anschlag 37 belastenden Rückstellfeder 26 ist. Im Lagerteil 21 bzw. in dessen Deckel 21 a ist die Druckfeder 39 so positioniert, dass der Stellhebel 24 auf ihr zur Anlage kommt, wenn es durch die Kraft der Rückstellfeder 26 in seine Ausgangsposition gedreht wird. Da die Vorspannkraft der vorgespannten Druckfeder 39 größer als die Kraft der Rückstellfeder 26 ist, wird eine definierte Ausgangsposition des Stellhebels 24 gewährleistet.

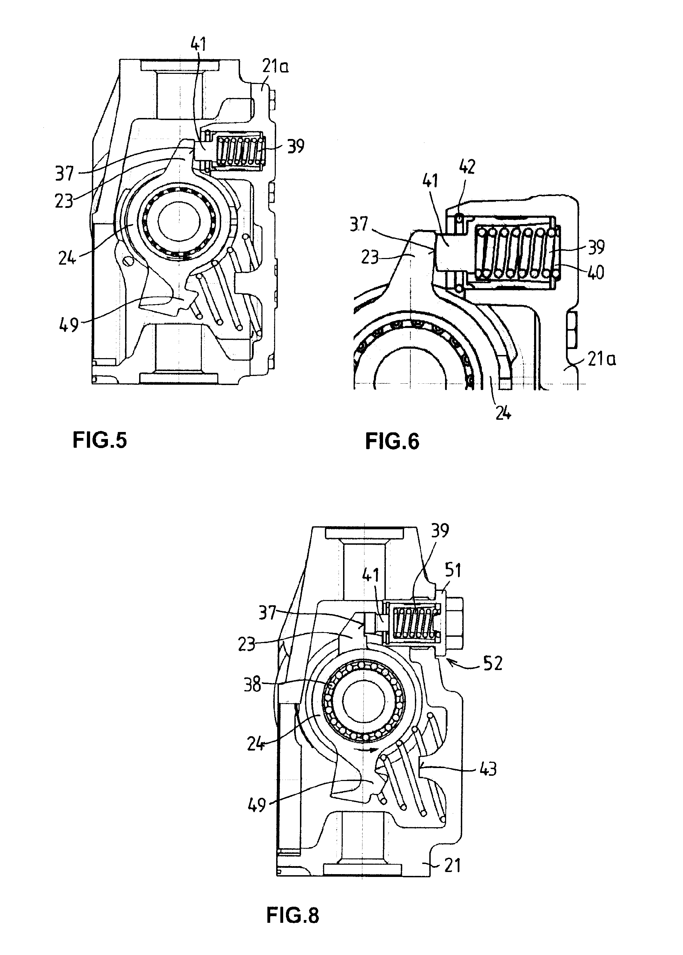

Insbesondere ist die Druckfeder 39 in einer beispielsweise zylindrischen Ausnehmung 40 des Lagerteils 21 bzw. dessen Deckels 21a des Druckstangenstellers 16 aufgenommen und dort mit beiden Enden vorgespannt abgestützt, wobei die Druckfeder 39 den Stellhebel 24 über ein Druckstück 41 kontaktiert, welches in der Ausnehmung 40 in Anschlagrichtung verschieblich gelagert ist, wie am besten Fig.4 und Fig.6 zeigen. Das Druckstück 41 wird beispielsweise durch einen in eine radial innere Ringnut der Ausnehmung 40 im Deckel 21 a eingesetzten Sprengring 42 am Austritt aus der Ausnehmung 40 gehindert bzw. hierdurch die Vorspannung der Druckfeder 39 erzeugt. Genauer spannt das Druckstück 41 durch die unter Vorspannung stehende Druckfeder 39 axial gegen einen in der Ausnehmung 40 ausgebildeten Anschlag, welcher hier durch den Sprengring 42 gebildet wird. Anhand von Fig.4 ist leicht vorstellbar, dass aufgrund des Deckels 21 a die Druckfeder 39, das Druckstück 41 sowie die Rückstellfeder 26 einfach zu montieren sind.

Die Rückstellfeder 26, hier bevorzugt eine Kegelfeder hält daher den Stellhebel 24 in seiner Ausgangsposition. Der Stellhebel 24 liegt dabei an dem Druckstück 41 an, welches in der beispielsweise als Sacklochbohrung ausgestalteten Ausnehmung 40 im Lagerteil 21 verschieblich gelagert ist und der gegen die vorgespannte Druckfeder 39 verschoben werden kann.

Wie aus Fig.4, 5 und 7 hervorgeht ist zusätzlich zu dem der Ausgangsstellung des Stellhebels 24 zugeordneten und mit der Druckfeder 39 Anschlag 37 ein weiterer Anschlag 43 im Lagerteil 21 bzw. dessen Deckel 21 a vorgesehen, gegen welchen der Stellhebel 24 gegen die Wirkung der Rückstellfeder 26 mit einem weiteren zapfenförmigen Anschlagabschnitt 49 anschlägt, wenn der Druckstangensteller 16 einen maximalen Nachstellweg nachstellt. Diese Situation ist in Fig.7 gezeigt.

Bei großer elastischer Verformung der Schlingfeder 28 des Schlingfederfreilaufs 29 wird die Druckfeder 39 überdrückt, wie Fig.5 und Fig.6 zeigen. Das auf den Stellhebel 24 und damit auf den Hülsenfreilauf 38 wirkende Moment wird dann begrenzt auf das Moment bzw. die Kraft, welche durch die Druckfeder 39 in den Hülsenfreilauf 38 eingeleitet wird. Das Druckstück 41 wird dann bei elastischer Verformung der Druckfeder 39 wie in Fig.6 gezeigt, um ein Stück in die Ausnehmung bzw. Sacklochbohrung 40 hinein verschoben und hebt vom Sprengring 42 ab, der sonst in der Ausgangsstellung den axialen Anschlag für das Druckstück 42 bildet.

Lässt daher der Schlingfederfreilauf 29 wegen elastischer Dehnung unter Last eine gewisse Verdrehung der Rohrmutter 31 in verkürzender Richtung zu, so kann der Stellhebel 24 dieser Drehung gegen die Kraft der Druckfeder folgen, das Druckstück 41 verschiebt sich dabei linear (siehe Fig. 6). Der Hülsenfreilauf 38 wird dabei nur mit dem Moment belastet, welches aus der Federkraft der Druckfeder 39 und dem Abstand ihrer Wirkungslinie von der Drehachse der Stellmutter 31 resultiert, welche koaxial mit der Längsachse 25 ist.

Gemäß einer weiteren, in Fig.8 gezeigten Ausführungsform sind die Druckfeder 39 und das Druckstück 41 im Inneren einer Hohlschraube 51 gehalten, welche von außen her in eine als Gewindebohrung ausgebildete Durchgangsbohrung 52 des Lagerteils 21 eingeschraubt ist. Dann kann ein solcher elastischer Anschlag 37 auf einfache Weise in einem bereits bestehenden Druckstangennachsteller 16 nachgerüstet werden. Ansonsten ist der Aufbau und die Funktionsweise des elastischen Anschlags 37 wie beim vorangehenden Ausführungsbeispiel beschrieben. Nicht zuletzt erspart die Ausführungsform nach Fig.8 den Deckel 21 a der Ausführungsform gemäß Fig.4 bis Fig.6.

Gemäß einem weiteren, hier nicht dargestellten Ausführungsbeispiel kann das elastische Element anstatt als Druckfeder 39 als beliebiges elastisches Element ausgeführt sein. Insbesondere ist eine Ausführung als Kegelfeder, als mit dem Stellergehäuse oder Lagerteil 21 vulkanisierter oder separat angeordneter bzw. gelagerter Elastomer denkbar.

Nicht zuletzt ist auch eine Ausführung des elastischen Elements als mit dem Lagerteil 21 einstückiger Abschnitt denkbar, welcher aufgrund einer besonderen geometrischen Ausgestaltung eine höhere Elastizität aufweist als die an ihn angrenzenden Bereiche des Lagerteils 21. In diesem Fall rührt daher die höhere Nachgiebigkeit bzw. Elastizität nicht aus einer geringeren Materialsteifigkeit sondern aus einer geometrisch bedingt geringeren Steifigkeit des Anschlags 37 verglichen mit den angrenzenden Bereichen des Lagerteils 21 her.

### Bezugszeichenliste

- 1: Bremsscheibe
- 2: Bremsengehäuse
- 6: Zangenhebel
- 7: Bremszange
- 8: Zangenhebel
- 9: Bolzen
- 10: Koppelstelle
- 11: Bolzenfortsatz
- 12: Dreharm
- 13: Kraftabgabeorgan
- 14: Bremskraftmotor
- 15: Bremsbacke
- 16: Druckstangensteller
- 17: Koppelstelle
- 18: Koppelstelle
- 19: Koppelstelle
- 20: Koppelstelle
- 21: erstes Verschleißnachsteller-Gehäuse
- 21a: Deckel
- 22: zweites Verschleißnachsteller-Gehäuse
- 23: Anlageabschnitt
- 24: Stellhebel
- 25: Längsachse
- 26: Rückstellfeder
- 27: Gewindespindel
- 28: Schlingfeder
- 29: Schlingfederfreilauf
- 31: Stellmutter
- 32: Steuerstange
- 33: Koppelstelle
- 35: Drehhebel
- 35a: Ende
- 36: Anlenkstelle
- 37: Anschlag
- 38: Hülsenfreilauf
- 39: Druckfeder
- 40: Ausnehmung
- 41: Druckstück
- 42: Sprengring
- 43: Anschlag
- 44: Tothubeinrichtung
- 45: Hebelteil
- 46: Koppelstelle
- 49: Anlageabschnitt
- 51: Hohlschraube
- 52: Durchgangsbohrung
- 53: Verzahnung
- 54: Wirkfläche
- 55: Wirkfläche
- 56: Faltenbalg
- 57: Fortsatz
- 58: Stirnfläche
- 59: Stirnfläche
- 60: Kupplungshülse
- 100: Scheibenbremse

## Patentansprüche

1. Verschleißnachsteller (16) für eine Bremszange (7) einer Scheibenbremse (100) eines Schienenfahrzeugs, mit
a) einem Schraubgetriebe, welches als Verschraubungsteile eine Gewindespindel (27) und eine auf dieser verschraubbare Mutter (31) aufweist, wobei eines der Verschraubungsteile (27; 31) sowie ein Stellelement (24) zum drehenden Antrieb dieses Verschraubungsteils in Verschleißnachstellrichtung in einem ersten Verschleißnachsteller-Gehäuse (21) drehbar und das andere Verschraubungsteil (27; 31) in einem zweiten Verschleißnachsteller-Gehäuse (22) drehfest gelagert ist,
b) einem in Drehrichtung des drehbaren Verschraubungsteils (27; 31) entgegen einer Verschleißnachstellung sperrenden und in umgekehrter Drehrichtung freilaufenden Schlingfederfreilauf (29), durch welchen das drehbare Verschraubungsteil mit einem drehfesten Teil koppelbar ist, wobei
c) das drehfeste Teil unmittelbar durch das erste Verschleißnachsteller-Gehäuse (21) gebildet wird,
**dadurch gekennzeichnet, dass**
d) eine Schlingfeder (28) des Schlingfederfreilaufs (29) einerseits mit einer radial äußeren, eine äußere Oberfläche des ersten Verschleißnachsteller-Gehäuses (21) ausbildenden Wirkfläche (54) und andererseits mit einer radial äußeren Wirkfläche (55) des drehbaren Verschraubungsteils (27; 31) oder eines mit diesem mitdrehenden Elements (60) reibschlüssig zusammenwirkt, wobei die Wirkfläche (54) des ersten Verschleißnachsteller-Gehäuses (21) an einem rohrförmigen, mit dem ersten Verschleißnachsteller-Gehäuse (21) einstückigen Fortsatz (57) ausgebildet ist.

2. Verschleißnachsteller nach Anspruch 1, **dadurch gekennzeichnet, dass** die Schlingfeder (28) des Schlingfederfreilaufs (29) in radialer Richtung gesehen lediglich von einem Faltenbalg (56) umschlossen ist, welcher einendseitig an dem ersten Verschleißnachsteller-Gehäuse (21) und anderendseitig an dem zweiten Verschleißnachsteller-Gehäuse (22) festgelegt ist.

3. Verschleißnachsteller nach Anspruch 1 oder 2, **dadurch gekennzeichnet, dass** die Schlingfeder (28) lediglich durch Reibschluss die Wirkfläche (54) des ersten Verschleißnachsteller-Gehäuses (21) und die Wirkfläche (55) des drehbaren Verschraubungsteils (27; 31) oder des mit diesem mitdrehenden Elements (60) koppelt.

4. Verschleißnachsteller einem der vorhergehenden Ansprüche, **dadurch gekennzeichnet, dass** das drehbare Verschraubungsteil (27; 31) oder ein mit diesem mitdrehendes Element (60) eine in Axialrichtung weisende Stirnfläche (58) aufweist, welche eine korrespondierende Stirnfläche (59) des ersten Verschleißnachsteller-Gehäuses (21) zum Abstützen einer auf den Verschleißnachsteller (16) wirkenden Axialkraft kontaktiert.

5. Verschleißnachsteller nach einem der vorhergehenden Ansprüche, **dadurch gekennzeichnet, dass** das drehbare Verschraubungsteil die Gewindespindel (27) und das drehfeste Verschraubungsteil des Schraubgetriebes die Mutter (31) ist.

6. Verschleißnachsteller nach Anspruch 5, **dadurch gekennzeichnet, dass** die Gewindespindel (27) mit einer Kupplungshülse (60) als mitdrehendes Element gekoppelt ist, an deren radial äußerer Umfangsfläche eine Wirkfläche (55) für den Angriff der Schlingfeder (28) des Schlingfederfreilaufs (29) ausgebildet ist.

7. Verschleißnachsteller nach Anspruch 6, **dadurch gekennzeichnet, dass** die Kupplungshülse (60) in dem ersten Verschleißnachsteller-Gehäuse (21) koaxial zur Gewindespindel (27) drehgelagert ist.

8. Verschleißnachsteller nach einem der Ansprüche 1 bis 4, **dadurch gekennzeichnet, dass** das drehbare Verschraubungsteil die Mutter (31) und das drehfeste Verschraubungsteil die Gewindespindel (27) ist.

9. Verschleißnachsteller nach Anspruch 8, **dadurch gekennzeichnet, dass** die Wirkfläche (55) für den Angriff der Schlingfeder (28) des Schlingfederfreilaufs (29) unmittelbar an einer radial äußeren Umfangsfläche der Mutter (31) ausgebildet ist.

10. Scheibenbremse eines Schienenfahrzeugs, **dadurch gekennzeichnet, dass** sie einen Verschleißnachsteller nach wenigstens einem der vorhergehenden Ansprüche beinhaltet.

## Claims

1. Wear adjuster (16) for a brake caliper (7) of a disk brake (100) of a rail vehicle, having
a) a helical gearing, which has, as screw connection parts, a threaded spindle (27) and a nut (31) which can be screwed thereon, wherein one of the screw connection parts (27; 31) and an actuator element (24) for rotatably driving said screw connection part in a wear adjustment direction can be rotated in a first wear adjuster housing (21), and the other screw connection part (27; 31) is mounted in a rotationally fixed fashion in a second wear adjuster housing (22),
b) a wrap spring freewheeling mechanism (29), which blocks in the direction of rotation of the rotatable screw connection part (27; 31) counter to a wear adjustment and freewheels in the opposite direction of rotation, it being possible to couple the rotatable screw connection part to a rotationally fixed part by means of said wrap spring freewheeling mechanism (29),
wherein
c) the rotationally fixed part is formed directly by the first wear adjuster housing (21),
**characterized in that**
d) a wrap spring (28) of the wrap spring freewheeling mechanism (29) interacts in a frictionally locking fashion, on the one hand, with a radially outer active face (54), which forms an outer surface of the first wear adjuster housing (21), and on the other hand, with a radially outer active face (55) of the rotatable screw connection part (27; 31) or an element (60) which rotates along therewith, wherein the active face (54) of the first wear adjuster housing (21) is formed on a tube-shaped projection (57) which is in one piece with the first wear adjuster housing (21).

2. Wear adjuster according to Claim 1, **characterized in that** the wrap spring (28) of the wrap spring freewheeling mechanism (29) is, when viewed in the radial direction, enclosed exclusively by a folding bellows (56) which is secured at one end to the first wear adjuster housing (21) and at the other end to the second wear adjuster housing (22).

3. Wear adjuster according to Claim 1 or 2, **characterized in that** the active face (54) of the first wear adjuster housing (21) and the active face (55) of the rotatable screw connection part (27; 31) or that of the element (60) which rotates along therewith are coupled by the wrap spring (28) exclusively by frictionally locking engagement.

4. Wear adjuster according to one of the preceding claims, **characterized in that** the rotatable screw connection part (27; 31) or an element (60) which rotates along therewith has an end face (58) which points in the axial direction and which makes contact with a corresponding end face (59) of the first wear adjuster housing (21) in order to support an axial force acting on wear adjuster (16).

5. Wear adjuster according to one of the preceding claims, **characterized in that** the rotatable screw connection part is the threaded spindle (27) and the rotationally fixed screw connection part of the helical gearing is the nut (31).

6. Wear adjuster according to Claim 5, **characterized in that** the threaded spindle (27) is coupled to a coupling sleeve (60) as an element which rotates along, on the radially outer circumferential face of which threaded spindle (27) an active face (55) is formed for the wrap spring (28) of the wrap spring freewheeling mechanism (29) to engage on.

7. Wear adjuster according to Claim 6, **characterized in that** the coupling sleeve (60) is rotatably mounted in the first wear adjuster housing (21) coaxially with respect to the threaded spindle (27).

8. Wear adjuster according to one of Claims 1 to 4, **characterized in that** the rotatable screw connection part is the nut (31), and the rotationally fixed screw connection part is the threaded spindle (27).

9. Wear adjuster according to Claim 8, **characterized in that** the active face (55) for the wrap spring (28) of the wrap spring freewheeling mechanism (29) to engage on is formed directly on a radial outer circumferential face of the nut (31).

10. Disk brake of a rail vehicle, **characterized in that** it includes a wear adjuster according to at least one of the preceding claims.

## Revendications

1. Dispositif (16) de rattrapage d'usure pour un étrier (7) d'un frein (100) à disque d'un véhicule ferroviaire, comprenant
a) un engrenage hélicoïdal, qui a, comme parties de vissage, une broche (27) filetée et un écrou (31) pouvant se visser sur celle-ci, l'une des parties (27, 31) de vissage, ainsi qu'un élément (24) d'actionnement pour l'entraînement en rotation de cette partie de vissage, étant montée tournante dans le sens de rattrapage d'usure dans une première enveloppe (21) du dispositif de rattrapage d'usure et l'autre partie (27, 31) de vissage étant montée fixe en rotation dans une deuxième enveloppe (22) du dispositif de rattrapage d'usure,
b) une roue libre (29) à ressort en boucle empêchant la partie (27, 31) de vissage tournante de tourner dans le sens de rotation contraire au rattrapage d'usure, autorisant le sens de rotation inverse et par laquelle la partie de vissage tournante peut être accouplée à une partie fixe en rotation,
dans lequel
c) la partie fixe en rotation est formée directement par la première enveloppe (21) du dispositif de rattrapage d'usure, **caractérisé en ce que**
d) un ressort (28) en boucle de la roue libre (29) à ressort en boucle coopère à frottement d'une part avec une face (54) efficace extérieure radialement, constituant une surface extérieure de la première enveloppe (21) du dispositif de rattrapage d'usure, et d'autre part avec une face (55) efficace extérieure radialement de la partie (27, 31) de vissage tournante ou d'un élément (60) entraîné avec celle-ci, la surface (54) efficace de la première enveloppe (21) du dispositif de rattrapage d'usure étant constituée, sur un prolongement (57) tubulaire, d'une seule pièce avec la première enveloppe (21) du dispositif de rattrapage d'usure.

2. Dispositif de rattrapage d'usure suivant la revendication 1, **caractérisé en ce que** le ressort (28) en boucle de la roue libre (29) à ressort en boucle est, considéré dans la direction radiale, entouré seulement d'un soufflet (56), qui, du côté d'une extrémité, est fixé à la première enveloppe (21) du dispositif de rattrapage d'usure et du côté de l'autre extrémité à la deuxième enveloppe (22) du dispositif de rattrapage d'usure.

3. Dispositif de rattrapage d'usure suivant la revendication 1 ou 2, **caractérisé en ce que** le ressort (28) en boucle accouple seulement par frottement la face (54) efficace de la première enveloppe (21) du dispositif de rattrapage d'usure et la face (55) efficace de la partie (27, 31) de vissage tournante ou de l'élément (60) entraîné avec celle-ci.

4. Dispositif de rattrapage d'usure suivant l'une des revendications précédentes, **caractérisé en ce que** la partie (27, 31) de vissage tournante ou un élément (60) entraîné avec celle-ci a des faces (58) frontales, qui sont tournées dans la direction axiale et qui, pour venir à l'appui d'une force axiale agissant sur le dispositif (16) de rattrapage d'usure, vient en contact avec une face (59) frontale correspondante de la première enveloppe (21) du dispositif de rattrapage d'usure.

5. Dispositif de rattrapage d'usure suivant l'une des revendications précédentes, **caractérisé en ce que** la partie de vissage tournante est la broche (27) filetée et la partie de vissage fixe en rotation de l'engrenage hélicoïdal est l'écrou (31).

6. Dispositif de rattrapage d'usure suivant la revendication 5, **caractérisé en ce que** la broche (27) filetée est accouplée à une douille (60) d'accouplement, comme élément entraînant, à la surface périphérique extérieure radialement duquel est constituée une face (55) efficace, pour l'attaque du ressort (28) en boucle de la roue libre (29) à ressort en boucle.

7. Dispositif de rattrapage d'usure suivant la revendication 6, **caractérisé en ce que** la douille (60) d'accouplement est montée tournante coaxialement à la broche (27) filetée dans la première enveloppe (21) du dispositif de rattrapage d'usure.

8. Dispositif de rattrapage d'usure suivant l'une des revendications 1 à 4, **caractérisé en ce que** la partie de vissage tournante est l'écrou (31) et la partie de vissage fixe en rotation est la broche (27) filetée.

9. Dispositif de rattrapage d'usure suivant la revendication 8, **caractérisé en ce que** la face (55) efficace pour l'attaque du ressort (28) en boucle de la roue libre (29) à ressort en boucle est constituée directement sur une surface périphérique extérieure radialement de l'écrou (31).

10. Frein à disque d'un véhicule ferroviaire **caractérisé en ce qu'**il comporte un dispositif de rattrapage d'usure suivant au moins l'une des revendications précédentes.
